# EUROPEAN PATENT SPECIFICATION

(11) **EP 1 532 779 B1**
(45) Date of publication and mention of the grant of the patent: **13.06.2012**
(21) Application number: 03788164.6
(22) Date of filing: 14.08.2003
(51) Int. Cl.: H04W 36/10

(54) **MBMS PTP AND PTM CHANNEL CHANGE**
WECHSEL EINES MBMS PTP-UND PTM-KANALS
CHANGEMENT DE CANAUX PTP ET PTM DE MBMS

(30) Priority: 16.08.2002 CN 02130570
(43) Date of publication of application: 25.05.2005
(73) Proprietor: Samsung Electronics Co., Ltd., Suwon-si, Gyeonggi-do 442-742 (KR); Beijing Samsung Telecom R & D Center, Haidian District, Beijing 100081 (CN)
(72) Inventor: WANG, H., Beijing 100081 (CN); LI, D., Beijing 100081 (CN); SUN, C., Beijing 100081 (CN); LI, X., Beijing 100081 (CN)
(74) Representative: Grünecker, Kinkeldey, Stockmair & Schwanhäusser
(86) International application number: PCT/KR2003/001649
(87) International publication number: WO 2004/017580

(56) References cited:
- WO-A-01/31948
- WO-A-2004/002184
- 3GPP: "3rd Generation Partnership Project" 3GPP TS 25.346 V1.1.0, XX, XX, May 2002 (2002-05), pages 1-11, XP002260225
- LUCENT TECHNOLOGIES: "Discussion paper on impact of Iur on MBMS Iu bearer selection" 3GPP TSG SA WG 2 #25, S2-021755, [Online] 24 June 2002 (2002-06-24), - 28 June 2002 (2002-06-28) pages 1-4, XP002452904 Retrieved from the Internet: URL:http://www.3gpp.org/ftp/tsg_sa/WG2_Arc h/TSGS2_25/tdocs/> [retrieved on 2007-09-27]
- ERICSSON: "UTRAN architectural aspects in relation with MBMS" 3GPP TSG-RAN WG2 #30, R2-021635, [Online] 24 June 2002 (2002-06-24), - 28 June 2002 (2002-06-28) pages 1-4, XP002452905 Retrieved from the Internet: URL:http://www.3gpp.org/ftp/tsg_ran/WG2_RL 2/TSGR2_30/Docs/Zips/> [retrieved on 2007-09-27]
- SACHS J., WAGER S., WIEMANN H.: 'Performance of shared and dedicated resources in WCDMA' WIRELESS COMMUNICATIONS AND NETWORKING CONFERENCE, 2000. WCNC. IEEE vol. 2, 23 September 2000 - 28 September 2000, pages 759 - 764, XP010532345

## Description

### BACKGROUND OF THE INVENTION

### Field of the invention

The present invention relates to a multimedia broadcast and multicast services, more particularly to a channel switching methods of Multimedia Broadcast and Multicast P-t-P and P-t-M channel.

### Description of the prior art

Multimedia Broadcast and Multicast Service (hereinafter referred to as MBMS) is new Point to Multipoint (hereinafter referred to as P-t-M) service in 3^{rd} generation mobile communication. The type of the channel used by MBMS can be Point to Point (hereinafter referred to as P-t-P) channel or P-t-M channel according to the number of service users. In current P-t-P service mechanism, when a user moves to a new cell, that is a destination cell, the channel used by him/her handovers from the source cell to the destination cell. Existing channel handovers are all based on P-t-P channel and the channel characteristics don't change. In MBMS service, the changing cell may result in changes of channel characteristics.

To better explain this patent, MBMS system structure is illustrated in Figure 9.

MBMS network structure adds new network elements based on the core network of General Packet Radio Service (hereinafter referred to as GPRS). 01 Broadcast and multicast service centre (hereinafter referred to as BM-SC) is the service control centre of MBMS system. 02 Gateway GPRS Supporting Node (hereinafter referred to as GGSN) and 03 Service GPRS Supporting Node (hereinafter referred to as SGSN) consist of the transmission network of MBMS service and provide route for data transfer. 06 Home Location Register (hereinafter referred to as HLR) stores the user-related data and can provide services like user authentication. 04UMTS Terrestrial Radio Access Network (hereinafter referred to as UTRAN) provides radio resources for MBMS service in air interface. 07Uu denotes the radio interface between terminal and radio access network. 05 User Equipment (hereinafter referred to as UE) is the terminal device receiving data. Radio resources used by MBMS service are not dedicated for one user, but are shared by all users using this service.

In conventional system, it is due to Serving RNC (hereinafter referred to as SRNC) to decide whether to do the SRNC relocation when the user in the system handover between cells in different RNCs but in the same SGSN. If SRNC relocation is not performed, data and signalling stream are transferred to Drift RNC (hereinafter referred to as DRNC) via Iur interface, and then transferred to UE from DRNC. In handover procedure, different processes are taken according to different radio connection status that the user stays in.

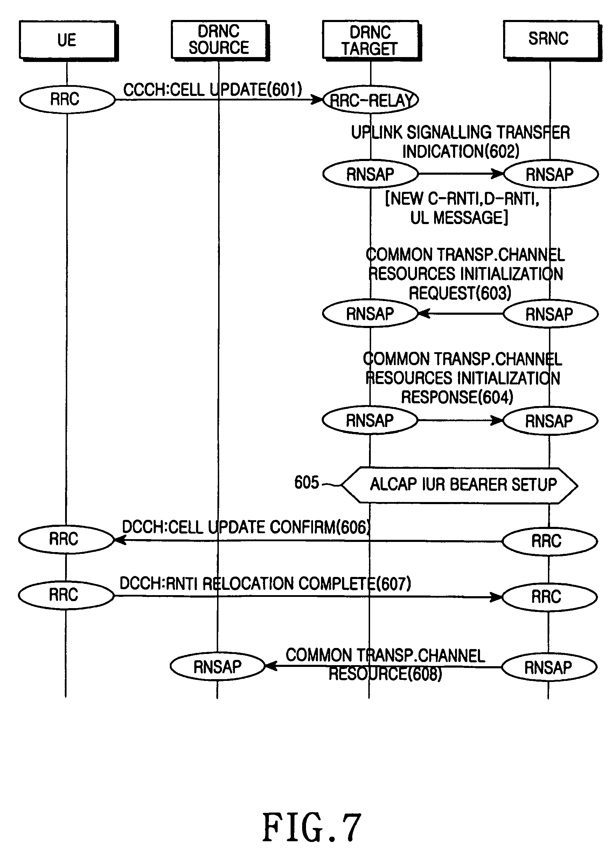

In Idle, CELL_FACH (cell_ Forward Access Channel), CELL_PCH (cell_ Paging Channel) and URA_PCH (UTRAN Registration Area_ Paging Channel) statuses, when UE moves from one cell in SRNC to a cell in another RNC, the destination RNC is called as DRNC. UE will send "cell update" message to DRNC, and DRNC transfers it to SRNC via Iur interface, then SRNC will communicate with DRNC to obtain common resource information of the cell in DRNC to notify UE of this information. Figure 7 illustrates the cell update process, which is as follows:
- 601: After UE re-selects a cell, it sends a cell update message to DRNC via common control channel (CCCH) using a radio resource control (RRC) protocol.
- 602: DRNC allocates a D-RNTI (DRNC-Radio Network Temporary Identifier) to UE and then sends a uplink signalling transfer indication message to SRNC using a radio network subsystem application part (RNSAP).
- 603: SRNC decides not to do SRNC relocation and sends a common transport channel resource initialization request message to DRNC.
- 604: DRNC informs SRNC the information on common channel through the message of common transport channel resource initialization response.
- 605: SRNC sets up data bearer on Iur interface using an access link control application part (ALCAP).
- 606: SRNC sends a cell update confirmation message to UE to inform UE common channel information of the new cell and new UE identifier via a dedicated control channel (DCCH) using RRC protocol.
- 607: UE responds to SRNC to complete the cell update process via DCCH.
- 608: SRNC deletes the user's resources on the original cell using RNSAP by sending a common transport channel resources message.

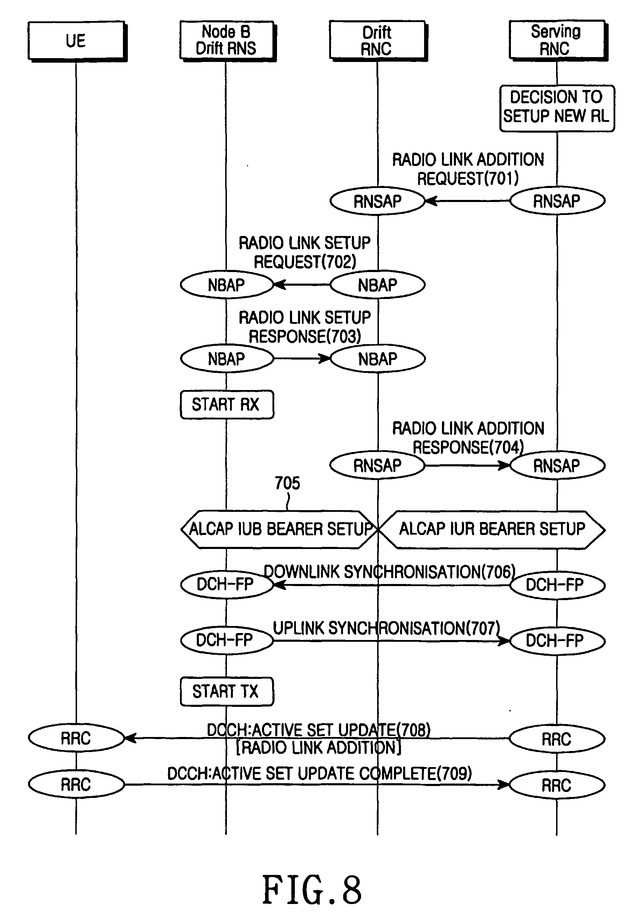

In CELL_DCH (cell_ Dedicated Channel) status, UE moves to a cell in another RNC. SRNC decides to handover to another cell according to the measurement reported by UE and notifies DRNC of dedicated radio link configurations. After DRNC completes configuring, SRNC is informed to notify UE of the radio link situation after UE handover. Figure 8 illustrates the cell handover process under this status.
- 701: SRNC decides to set up a new dedicated radio link (RL) for the UE in the new cell of DRNC. SRNC sends a radio link setup request message to DRNC using RNSAP and informs DRNC of dedicated channel information.
- 702-703: DRNC set up a new radio dedicated link with a Node B of the DRNC using a Node B application part (NBAP).
- 704: DRNC sends a radio link addition response message to SRNC.
- 705: SRNC sets up Iur interface and Iub interface data bearer using ALCAP.
- 706-707: Synchronize data frame on downlink and uplink using DCH frame pulse (FP).
- 708-709: SRNC notifies UE to add a new dedicated link via DCCH by sending active set update message using RRC. UE sends active set update complete message in response to the active set update message.

In conventional system, the user's signaling and data are all sent to DRNC via SRNC, and then DRNC sends them to user. The type of channels used by user before and after handover won't be changed. For example, switch from dedicated channel to dedicated channel. MBMS is a new P-t-M service. MBMS service can use P-t-P channel or P-t-M channel for data transfer. RNC determines the channel type according to the number of users applying for the same kind of MBMS service in a cell. When the number of users using the same kind of MBMS service is small, MBMS channel type is P-t-P channel; when the user number for this service exceeds a certain threshold, MBMS channel type is P-t-M channel.

Therefore, when user moves from a cell in SRNC to a cell in DRNC during the process of cell reselection, SRNC doesn't relocate. DRNC determines the type of MBMS channel according to the number of users applying for the same kind of MBMS service in the cell, which may result in the difference between MBMS channel types used by user before and after handover. So it is necessary to re-configure MBMS channel used by the user from P-t-P channel to P-t-M channel. Conventional handover technology hasn't relates to the situation.

After UE completes the above cell handover process, if the number of MBMS service's users changes due to the cell users' moving in and moving out of the cell, or other users' joining in and leaving the same MBMS service, and the threshold of user number is exceeded, MBMS channel type will be changed. How to notify SRNC of MBMS channel's changes in the cell of SRNC and to let SRNC notify all users in the cell to re-configure MBMS channel hasn't been concerned in current technology.

RNC is responsible for counting the number users applying for MBMS service. If a handover is made from a cell in SRNC to the cell in DRNC During user's cell handover, SRNC re-positioning isn't performed, another problem to be solved is that SRNC needs to notify DRNC of the MBMS service type applied for by the user to make DRNC re-count the number of MBMS service users in the cell. As MBMS is a new service, the conventional handover mechanism is not completely applicable to MBMS service.

The document "Technical Specification Group Radio Access Network; Introduction of the Multimedia Broadcast Multicast Service (MBMS) in the Radio Access Network (Stage-2) (Release 6)"; 3rd Generation Partnership Project TS 25.346 V1.1.0; 05-2002; pages 1 to 11, discloses channel type switching in which the CRNC is responsible for the decision regarding having p-t-m transmission or no p-t-m transmission in a cell for a specific MBMS service.

### SUMMARY OF THE INVENTION

Accordingly, an object of the present invention is to provide a handover method of channel switching for MBMS service that the user is receiving when UE handovers to another RNC and SRNC doesn't re-position.

Another object of the invention is to provide a handover method for MBMS channel type switching when MBMS channel type changes due to other users' leaving or joining the same MBMS service, or moving in or out of the cell while UE doesn't move.

According to one aspect of the invention, a channel type switching method for MBMS point to point (P-t-P) and point to multi point (P-t-M) channel, when a UE having MBMS service moves to a cell in drift radio network controller (DRNC) which have a Iur interface between a serving radio network controller (SRNC), comprising the steps of:
DRNC deciding to perform switching channel type between common channel and dedicated channel based on the number of user having MBMS service in the cell;
DRNC notifying SRNC of MBMS channel type and channel parameters.

According to another aspect of the invention, a channel type switching method for multi media broadcast and multicast service (MBMS) point to point (P-t-P) and point to multi point (P-t-M) channel, in a radio network controller, comprising steps of:
checking the number of MBMS users in a cell when a user leaves from the on-going MBMS service;
determining the MBMS channel type according to the number of user having MBMS and a threshold; and
reporting the changes of MBMS channel type to a serving radio network controller (SRNC).

According to the other aspect of the invention, a channel type switching method for multi media broadcast and multicast service (MBMS) point to point (P-t-P) and point to multi point (P-t-M) channel, in a radio network controller, comprising the steps of:
transmitting, SRNC, MBMS channel information inquiry message to a driving radio network controller (DRNC);
transmitting, upon receiving the channel information inquiry message in DRNC, MBMS channel type and channel parameters of MBMS channel to the SRNC; and
notifying, in SRNC, UE to re-configure MBMS channel via RRC message to complete channel switching, wherein the channel type is determined based on the number of user having MBMS service in the cell.

According to the other aspect of the invention, a data communication channel establishment methods for setting up multimedia broadcast/multicast service (MBMS) with core network (CN) via driving radio network controller (DRNC), when a UE moves to a cell controlled by the DRNC, comprising the steps of:
serving radio network controller (SRNC) sending messages to the DRNC;
the DRNC sending MBMS service request message to the CN;
the CN requesting to set up data connection with the DRNC; and
the DRNC sending response message to the CN.

### BRIEF DECSRIPTION OF THE DRAWINGS

Figure 1 illustrates a flow chart of Method One, when MBMS channel type switches from dedicated channel (UE exists in CELL_DCH status) to common channel or dedicated channel;
Figure 2 illustrates the flow chart of Method One, when MBMS channel type switches from common channel (UE exists in CELL_FACH status) to dedicated channel or common channel;
Figure 3 illustrates a flow chart of Method Two, when MBMS channel type switches between common channel and dedicated channel;
Figure 4 illustrates a flow chart of Method Three, when MBMS channel type switches from common channel to dedicated channel or common channel;

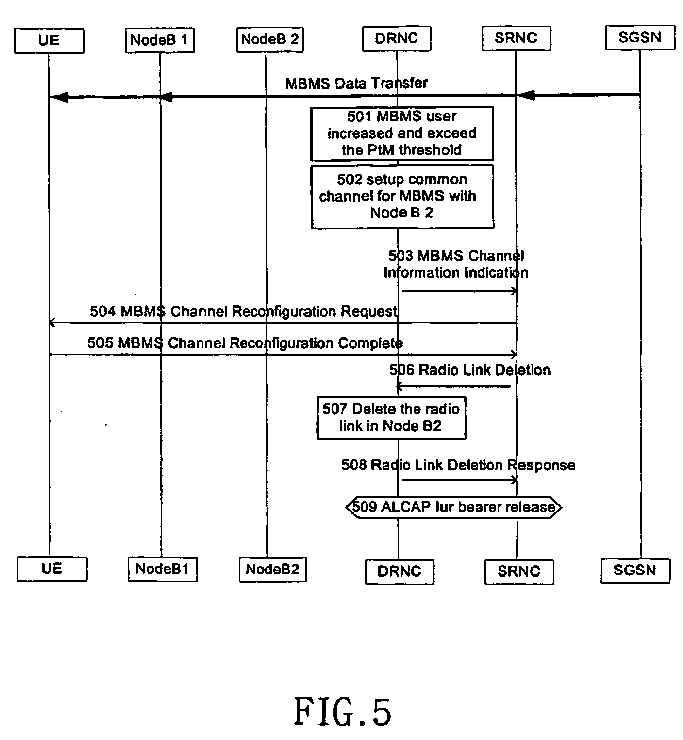

Figure 5 illustrates a flow chart of Method Four, when MBMS channel type switches from dedicated channel to common channel;

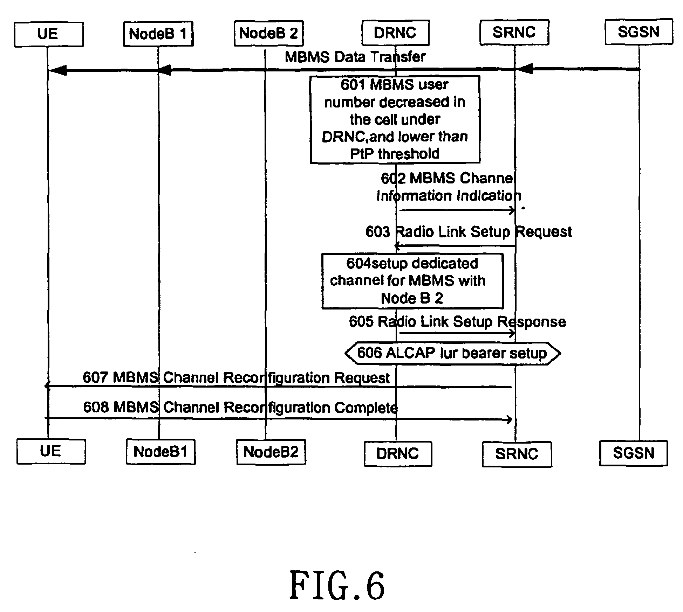

Figure 6 illustrates the flow chart of Method Four; when MBMS channel type switches from common channel to dedicated channel;
Figure 7 illustrates a cell update process on conventional Iur interface (No SRNC re-positioning);
Figure 8 shows a soft handover process on conventional Iur interface (No SRNC re-positioning).

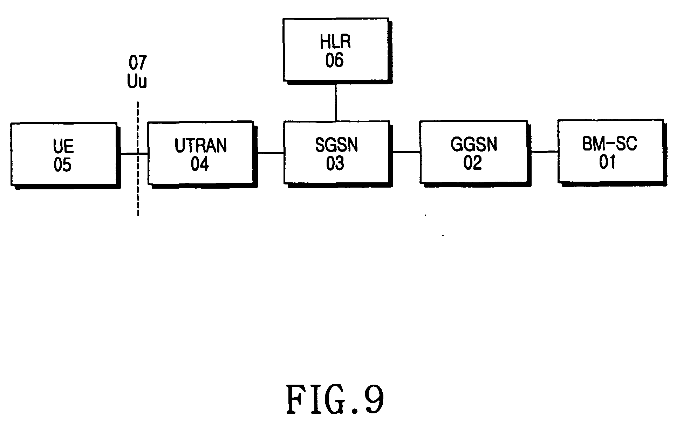

Figure 9 is the illustration for MBMS system structure.

### DETAILED DECSRIPTION OF THE PREFERRED EMBODIMENTS

Present invention proposes various methods to solve the problem of MBMS channel type switching when UE moves to a cell in DRNC and SRNC doesn't re-position.

Method one makes use of the process of existing cell handover to realize MBMS channel switching through modifying existing messages. Four messages can complete this process. In addition, through making modification to existing messages, RNC is enabled to correctly count the number of MBMS service users during users' movement.

Method two doesn't change existing messages for cell handover but realizes MBMS channel switching through adding two new messages. This method does not affect existing handover process, and the switching from dedicated channel to common channel and from common channel to dedicated channel can be realized in the same process.

Method three also doesn't change existing messages for cell handover and completes MBMS channel switching through new-added messages as well as by combining with existing messages on Iur interface.

When Iur interface exists, MBMS channel type may be changed due to other users' moving in/out of the cell or joining/leaving MBMS service. This situation belongs to the situation of how to complete MBMS channel switching when UE is static (There is no handover cell). This invention proposes Method Four to solve this problem.

Method Four adds one new message on Iur interface, through which, DRNC notifies SRNC of changes of MBMS channel type. If MBMS channel type changes into dedicated channel, SRNC sets up radio dedicated link for UE and Iur MBMS dedicated data bearer. In addition, SRNC is also responsible for notifying UE of MBMS channel information. If MBMS channel type changes from dedicated channel to common channel, DRNC informs MBMS common channel information to SRNC in the new-added message and then SRNC notifies UE to re-configure MBMS channel.

### (1) Channel type switching in moving situation

### Method 1:

### (1.1) From dedicated channel to common channel or dedicated channel

Channel setup process of switching from dedicated channel to dedicated channel is basically the same as those described in existing specification.

Channel setup process of switching from dedicated channel to common channel combines the setup process for dedicated channel and that for common channel. Firstly, the SRNC requests DRNC to set up dedicated channel and informs DRNC to set up dedicated channel-related information and MBMS service identifier received by the user.

DRNC re-counts the number of MBMS users according to the MBMS service identifier. If the number is higher than the threshold, DRNC informs SRNC in the response message that it cannot set up dedicated channel for the MBMS service but will set up common channel. After SRNC knows the change of channel type, it sends the message to DRNC again to request DRNC to set up common channel; and then DRNC reports common channel information to SRNC. After SRNC obtains common channel information, it notifies UE of the feature of new common channel.

### (1.2) From common channel to dedicated channel or common channel

Channel setup process of switching from common channel to common channel is basically same as those described in existing specification.

Channel setup process of switching from common channel to dedicated channel combines the setup process for dedicated channel and that for common channel.

The setup process is as follows. Firstly, SRNC requests DRNC to set up common channel and informs the MBMS service identifier received by the user to DRNC. DRNC re-counts the number of MBMS users according to the MBMS service identifier. If the number is equal to or lower than the threshold, DRNC informs SRNC in the response message that it cannot set up common channel for the MBMS service but a dedicated channel will be set up. After SRNC receives the change of channel type, it sends the message to DRNC again to request DRNC to set up dedicated channel; and then DRNC reports dedicated channel information to SRNC. After SRNC obtains dedicated channel information, it notifies UE of the feature of new dedicated channel.

### Method 2:

SRNC decides to handover to a new cell after it receives the cell update message or measurement report. SRNC informs MBMS service identifier, MBMS dedicated channel information and common channel information to DRNC in a combined message. DRNC re-counts the number of MBMS users according to MBMS service identifier. DRNC decides to set up dedicated channel or common channel according to the number of users, and sets up corresponding channel according to channel information transmitted from SRNC. After successful setup of the channel, DRNC reports the corresponding common channel or dedicated channel parameters to SRNC and then SRNC informs UE to re-configure MBMS channel via RRC message.

### Method 3:

SRNC decides to handover to a new cell after it receives the cell update message or measurement report. SRNC inquires for MBMS channel type from DRNC. This message comprises MBMS service identifier that UE is receiving. DRNC re-counts the number of MBMS users according to MBMS service identifier. DRNC determines the type of MBMS channel for setup according to the number of MBMS service users, and reports to SRNC that the MBMS channel type is dedicated channel or common channel. If dedicated channel is used, SRNC sets up corresponding dedicated channel and Iur dedicated data bearer; If common channel is used, SRNC sends a message to DRNC to ask for MBMS common channel information, and notifies this information to UE via RRC.

### (2) Channel type switching in non-moving situation

### Method 4:

### Switching from dedicated channel to common channel

DRNC counts the number of MBMS users. If the number exceeds certain threshold, DRNC decides to set up common channel.

DRNC notifies SRNC of common channel information and SRNC notifies UE to re-configure channel.

### Switching from common channel to dedicated channel

DRNC counts the number of MBMS users. If the number is equal to or lower than certain threshold, DRNC decides to set up dedicated channel.

DRNC reports to SRNC and SRNC will set up MBMS dedicated channel and notify UE of dedicated channel information.

### (3) Count user number while moving

During cell handover procedure, an information element, i.e. MBMS service identifier, is added to the first message sent from SRNC to DRNC based on existing message, which is used by DRNC to count the number of MBMS service users.

### (4) Channel setup message

### (4.1) Modification to existing message

### Iur interface message

### Common transfer channel resource request message

A new information element, i.e. MBMS service identifier, is added to this message based on existing specification. MBMS service identifier includes two parts, i.e. APN(Access Point Name) and IP(Intemet Protocol) multicast address.

### Common transfer channel resource response message

A new information element, i.e. MBMS channel type, is added to this message based on existing specification. This is a Boolean value. For example, "1" means dedicated channel type and "0" means common channel type.

The message of radio link setup request adds a new information element, i.e. MBMS service identifier, to this message based on existing specification. MBMS service identifier includes two parts, i.e. APN and IP multicast address.

### Radio link setup response message

A new information element, i.e. MBMS channel type, is added to this message based on existing specification. This is a Boolean value. "1" means dedicated channel type and "0" means common channel type.

### RRC message

### Cell update confirmation message

A new information element, i.e. MBMS channel type, is added to this message based on existing specification. This is a Boolean value. For example, "1" means dedicated channel type and "0" means common channel type. And MBMS channel information is also added. This is an optional type. If MBMS channel type is dedicated channel, this message includes MBMS dedicated channel information, whose detailed information elements are the same as those in existing specification; If MBMS channel type is common channel, this message also includes MBMS common channel information.

### (4.2) New messages defined for MBMS channel switching

### (4.2.1) MBMS channel setup request message

Present invention defines a new message for Method Two, i.e. MBMS channel setup request. This is a message on Iur interface, through which SRNC notifies DRNC of the type of MBMS service UE is receiving and information of MBMS dedicated channel and common channel set up for the user. SRNC informs DRNC all information needed to set up MBMS dedicated channel and common channel in the message and DRNC re-counts the number of MBMS users to determine the type of MBMS channel to be set up. Set up corresponding MBMS channel according to parameters provided by this message.

This message includes following information elements:
➢ MBMS service identifier
   Include two parts, i.e. APN and IP multicast address.
➢ MBMS dedicated channel information,

Main contents include:
✔ Downlink transport combination format set
✔ Downlink dedicated physical channel time slot format
✔ Downlink frequency spreading code number
✔ Start point of downlink data receiving window
✔ End point of downlink data receiving window
✔ Dedicated transfer channel identifier
✔ Statistical description of transfer source
✔ Transfer channel format set
✔ Code error rate of transmission block
➢ Common channel information
✔ Drift radio network temporary identifier
✔ Transfer bearer requirements indication
✔ Transfer bearer logo.

### (4.2.2) MBMS channel setup response message

A new message defined by this invention for MBMS, i.e. MBMS channel setup response, is the response to the above message and is transferred from DRNC to SRNC. After setting up corresponding MBMS channel, DRNC uses the type of MBMS channel and sends back corresponding information on dedicated channel or common channel to SRNC to configure UE MBMS channel through RRC. The message notifies SRNC to set up following.

This message includes following information elements:
➢ MBMS service identifier
➢ MBMS dedicated channel information

This is an optional type. If DRNC decides to set up dedicated channel for MBMS service, this option is included in the message; if common channel is set up, this option isn't included. The main contents are as follows:
✔ Dedicated transfer channel identifier
✔ Binding identifier, i.e. the unique identifier allocated by DRNC for data transfer bearer.
✔ Transport layer address
➢ MBMS common channel information

This is an optional type. If DRNC decides to set up common channel for MBMS service, this option is included in the message; if a dedicated channel is set up, this option is excluded. Main contents are as follows:
✔ SCCPCH offset
✔ Download scrambling code
✔ Download frequency spreading code number
✔ Transport format combination set
✔ SCCPCH time-slot format
✔ FACH/PCH transport format set

### (4.2.3) MBMS channel information query message

A new message defined by this invention for Method Three, i.e. MBMS channel information query, is used for Iur interface. It is sent by SRNC to DRNC to inquire possible types of channel that DRNC may set up for this MBMS.
This message includes following information elements:
➢ MBMS service identifier

### (4.2.4) MBMS channel information report message

A new message defined by this invention for Method Three, i.e. MBMS channel information report, is used by DRNC to report all MBMS service type used to SRNC.
➢ This message includes following information elements:
➢ MBMS service identifier
➢ MBMS channel type. "1" means dedicated channel and "0" means common channel.

### (4.2.5) MBMS channel information indication message

A new message defined by this invention for Method Four, i.e. MBMS channel information indication, is used by DRNC to report MBMS service type used to SRNC.

The message includes following information elements:
➢ MBMS service identifier
➢ MBMS channel Type
➢ MBMS common channel information

The message includes this element if DRNC uses common channel to transfer MBMS data; otherwise, it doesn't include it.

### (4.2.6) MBMS service request message

A new message defined by this invention for MBMS, i.e. MBMS service request, is used by DRNC to apply for core network for MBMS service.

This message includes following information elements:
➢ MBMS service identifier
➢ Network field identifier
➢ Route field identifier
➢ Service filed identifier
➢ Iu signalling identifier
➢ Global RNC number

### (4.2.7) MBMS channel re-configuration request message

A new message defined by this invention for MBMS, i.e. MBMS channel re-configuration request, is used by SRNC to notify MBMS channel information to UE.

This message includes following information elements:
➢ MBMS service identifier
➢ Channel Type
➢ MBMS common channel information

The message includes this element if DRNC uses common channel to transfer MBMS data; otherwise, it doesn't include it.
➢ MBMS dedicated channel information

The message includes this element if DRNC uses dedicated channel to transfer MBMS data; otherwise, the message doesn't include the element.

### (4.2.8) MBMS channel re-configuration response message

A new message defined by this invention for MBMS, i.e. MBMS channel re-configuration response, is used by UE to notify SRNC that MBMS channel re-configuration has been completed.

This message includes following information elements:
➢ MBMS service identifier

In the following, we describe the flows of all kinds of methods of this invention by combining with appended figures.

### Method 1:

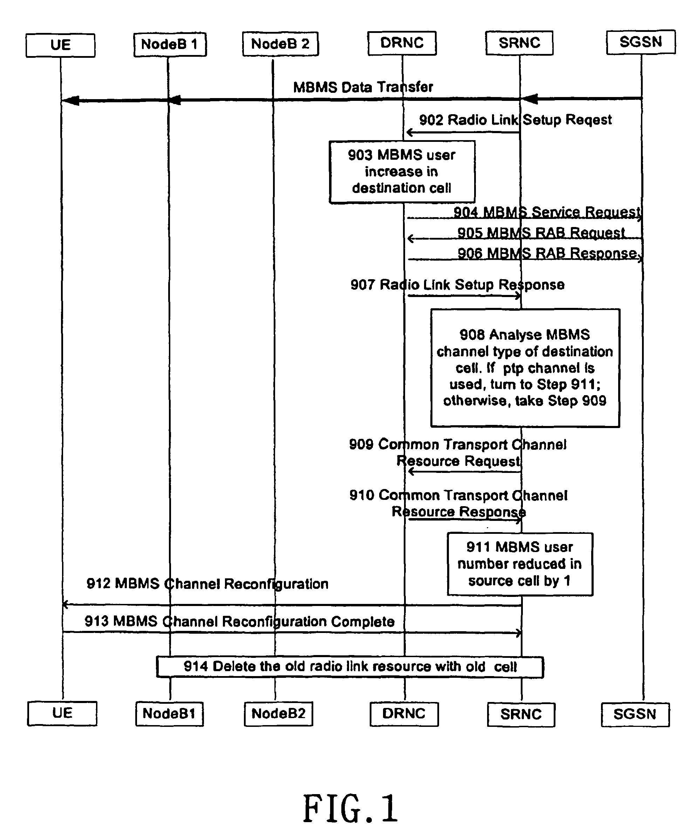

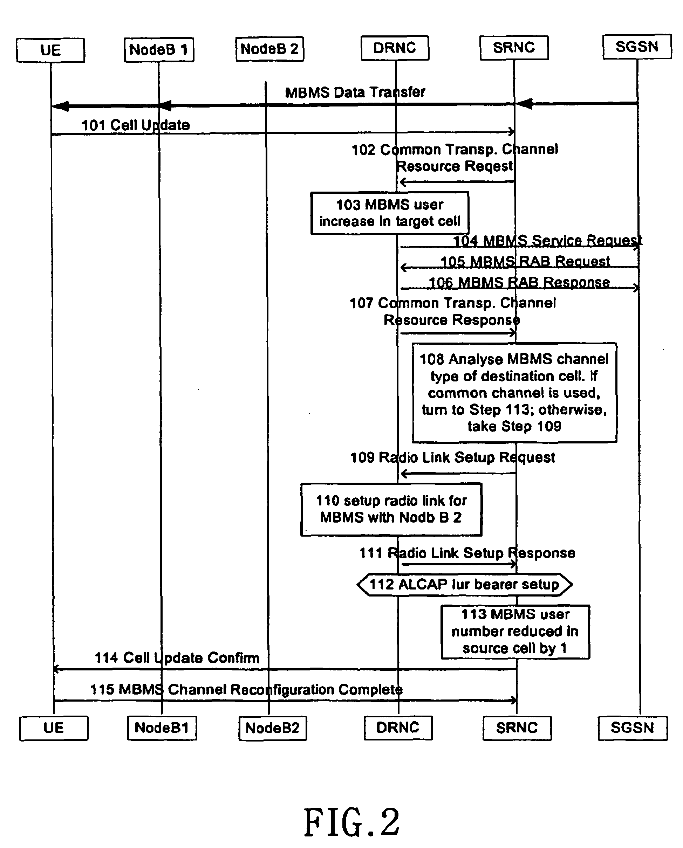

Figure 1 and Figure 2 illustrate the process for MBMS channel type switching when a user moves to a cell in DRNC and SRNC doesn't re-position. Detailed description for this process is given in the following. The first time, MBMS Data is transferring from SGSN to UE through Node B 1.

### (1) Switching from dedicated channel to dedicated channel or common channel

902 UE exists in CELL_DCH status and enters a destination cell in DRNC. According to existing specification, SRNC decides not to re-position SRNC and conducts cell handover process in accordance with the measurement report from UE. SRNC sends radio link setup request message to DRNC by adding a new information element "MBMS service identifier" based on existing message format to notify DRNC of MBMS service identifier that UE is receiving.
903 DRNC can know which kind of MBMS service the user has applied for according to the MBMS service identifier and adds the number of the corresponding service users by 1.
904 If the user is the first user to apply for the service in the local RNC, DRNC sets up its data channel with core network (hereinafter referred to as CN) comprised of SGSN. DRNC sends MBMS service request message to SGSN to inform it the MBMS identifier. And SGSN takes responsibility of setting up data channel.
905 SGSN sends MBMS RAB request or RAB allocation request message to DRNC.
906 After successful setup of data channel, DRNC sends MBMS RAB response or RAB allocation response message to SGSN.
907 DRNC sends radio link setup response message to SRNC. This message adds a new information element based on existing format, i.e. MBMS channel type, through which DRNC notifies SRNC of channel type of the MBMS service used by the cell where UE locates.
908 SRNC analyses the MBMS channel type. If the cell in DRNC where UE locates uses dedicated channel, SRNC turns to Step 911. Otherwise, SRNC takes step 909.
909 SRNC knows through analysis of the MBMS channel type that the cell in DRNC where UE locates uses common channel, it notifies DRNC to report common channel information through common transport channel resource request message.
910 DRNC sends common transport channel resource response message to SRNC, through which it reports MBMS common channel parameters to SRNC.
911 The source cell in SRNC reduces the number of the corresponding MBMS service users by 1 due to the leaving of UE.
912 SRNC notifies UE of MBMS channel information through RRC(Radio Resource Control) message, physical channel re-configuration request or MBMS channel re-configuration message.
913 UE re-configures MBMS channel if the MBMS channel parameters are not the same as those used before handover. Upon success, a success message is returned. UE sends MBMS channel re-configuration complete message to SRNC to report the completion of MBMS channel configuration. At this time, cell handover process is completed. If the new MBMS channel is dedicated channel, MBMS data is transferred by SRNC through DRNC to UE via Iur interface. If common channel is used, MBMS data is directly transferred to DRNC by SGSN and then transferred by DRNC to UE.
914 SRNC deletes the radio dedicated link of the source cell.

### (2) Switching from common channel to common channel or dedicated channel

101 UE enters a target cell in DRNC under non-CELL_DCH status. According to existing specification, the UE needs to perform cell update process. UE turns into CELL_FACH status, and then sends cell update message to SRNC. This message format is the same as that in existing specification.
102 SRNC sends common transport channel resource request message to DRNC by adding a new "MBMS service identifier" to existing message format, which is used to notify DRNC of the MBMS service identifier that UE is receiving.
103 DRNC can know which kind of MBMS service the user has applied for according to the MBMS service identifier and adds 1 to the number of corresponding service users.
104 If the user is the first user to apply for the service in the local RNC, DRNC sets up its data channel with core network (CN) comprised of SGSN and informs the MBMS service identifier to SGSN. DRNC sends MBMS service request message to SGSN and SGSN takes responsibility of setting up data channel.
105 SGSN sends MBMS RAB request or RAB allocation request message to DRNC.
106 After successful setup of data channel, DRNC sends MBMS RAB response or RAB allocation response message to CN.
107 DRNC sends common transport channel resource response message to SRNC. This message adds a new information element based on the existing format, i.e. MBMS channel type, through which DRNC notifies SRNC of the channel type of the MBMS service used by the cell where UE locates.
108 SRNC analyses the MBMS channel type. If the cell in DRNC where UE locates uses common channel, Step 113 is performed directly.
109 SRNC knows from analysis of the MBMS channel type that the cell in DRNC where UE locates uses dedicated channel and notifies DRNC to set up P-t-P MBMS channel by notifying DRNC of dedicated channel information in radio link setup request message.
110 DRNC sets up dedicated radio link with Node B2 covering the target cell in DRNC.
111 After the successful setup of the link, DRNC returns a radio link setup response message to notifying SRNC of a success.
112 Data link bearer is set up between SRNC and DRNC for MBMS data transfer.
113 The source cell in SRNC reduces the number of corresponding MBMS service users by 1 due to leaving of an UE.
114 SRNC notifies UE of MBMS channel information through cell update confirmation message.
115 UE re-configures MBMS channel if the MBMS channel parameters are not the same as those used before handover. Upon success, a success message is returned, i.e. MBMS channel re-configuration complete message. At this time, cell handover process is completed. If the new MBMS channel is dedicated channel, MBMS data is transferred by SRNC through DRNC to UE via Iur interface. If common channel is used, MBMS data is directly transferred to DRNC by SGSN and then transferred by DRNC to UE.

### Method 2:

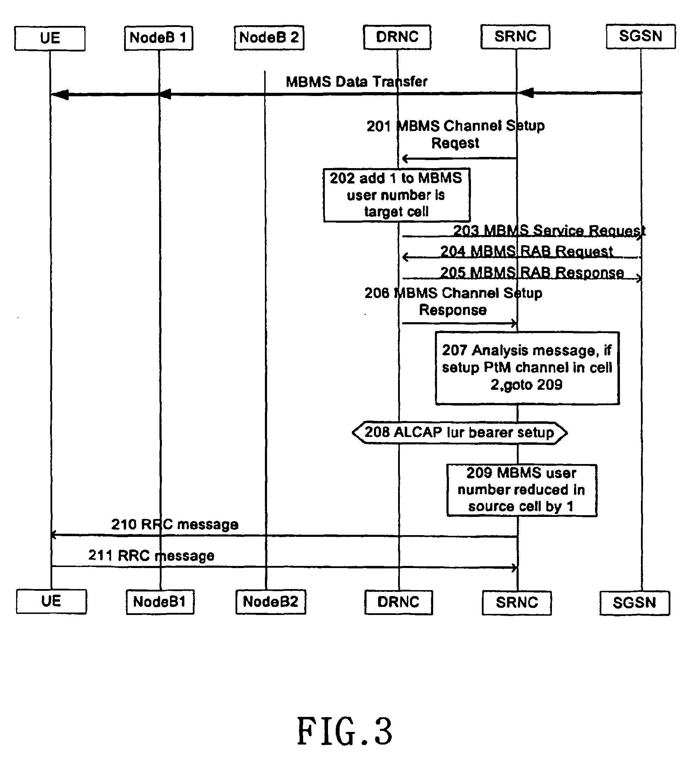

Figure 3 shows the process of causing MBMS channel type to be changed when user handovers to a cell in DRNC. Following is the description for this process in detail.
The process of switching between common channel and common channel
201 SRNC decides not to re-position SRNC according to cell update message or measurement report sent from UE and performs cell handover or cell update process. Messages and processes specially used for MBMS channel switching are added on the basis of not affecting existing handover process. SRNC sends MBMS channel setup request message to DRNC, which mainly includes contents in three aspects: The first is the identifier of MBMS service, which can make it easy for DRNC to count users; The second is MBMS dedicated channel information; the third is MBMS common channel information. It is up to DRNC to decide to use common channel or dedicated channel.
202 DRNC can know which kind of MBMS service the user has applied for according to the MBMS service identifier and adds the number of corresponding service users by 1.
203 If the user is the first user to apply for the service in the local RNC, DRNC sets up its data channel with core network (CN) comprised of SGSN. DRNC sends MBMS service request message to SGSN to inform it MBMS identifier. And SSGSN takes responsibility of setting up data channel.
204 SGSN sends MBMS RAB setup request or RAB allocation request message to DRNC
205 After successful setup of data channel, DRNC sends MBMS RAB setup response or RAB allocation response message to SGSN.
206 DRNC decides to set up dedicated channel or common channel according to the number of MBMS service users in the target cell. After successful setup, if MBMS uses dedicated channel, DRNC notifies SRNC of dedicated channel information using MBMS channel setup response message; if common channel is used, DRNC notifies SRNC of common channel information using MBMS channel setup response message.
207 SRNC analyses the MBMS channel type. If the cell in DRNC where UE locates uses common channel, SRNC turn to Step 209.
208 SRNC knows that the cell in DRNC where UE locates uses dedicated channel through analysis of MBMS channel type and then sets up data link bearer between SRNC and DRNC to transfer MBMS data.
209 The cell in SRNC reduces the number of the corresponding MBMS service users by 1 due to leaving of an UE.
210 SRNC notifies UE of MBMS channel information via RRC message, cell update confirmation message or other RRC message.
211 UE re-configures MBMS channel if the MBMS channel parameters are not the same as those used before handover. After its success, a success RRC message is returned. If the new MBMS channel is dedicated channel, MBMS data is transferred by SRNC through DRNC to UE via Iur interface. If common channel is used, MBMS data is directly transferred to DRNC by SGSN and then transferred by DRNC to UE.

### Method 3:

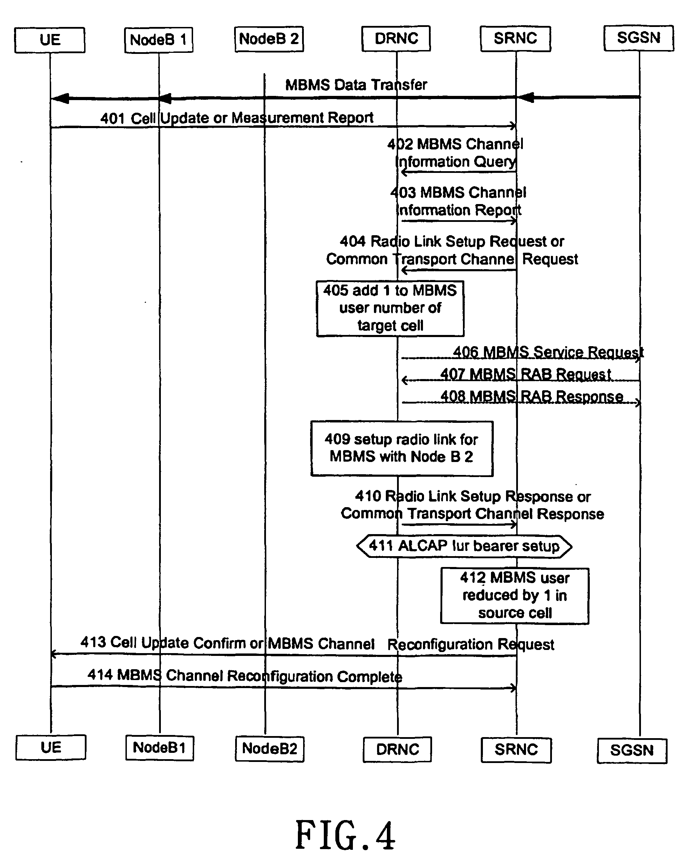

Figure 4 shows the process of causing MBMS channel type to be changed when user handovers to a cell in DRNC. Following is the description for this process in detail.

The process of switching between common channel and dedicated channel 401 UE sends different message reports to SRNC according to different statuses when entering another cell.
402 SRNC knows that the user is receiving MBMS service and queries DRNC about the channel information of the MBMS service by sending MBMS channel information query message. This message includes MBMS service identifier, according to which DRNC re-counts the number of users and then decides to support dedicated channel or common channel.
403 DRNC reports the channel type it provides for MBMS service to SRNC in MBMS channel information report message.
404 SRNC sends different messages to set up common channel or dedicated channel according to different channel type DRNC supports. If dedicated channel is set up, a radio link setup request message needs to be sent; if common channel is set up, a common transfer channel resource request message needs to be sent.
405 DRNC adds 1 to the number of the service users.
406-408 If the user is the first one who asks for the MBMS service, DRNC requires it to join the MBMS multicast group and to set up corresponding RAB by exchanging MBMS service request message, MBMS RAB request message, and MBMS RAB response message.
409 If SRNC indicates that DRNC shall sets up dedicated channel, DRNC needs to set up radio link Node B2 covering the cell where the UE locates.
410 DRNC informs SRNC information on radio link using radio link setup response message or common channel using common transport channel response message.
411 If MBMS uses dedicated channel, user plane of Iur interface shall be set up.
412 SRNC reduces the number of users in the source cell where the UE locates by 1.
413 SRNC indicates UE to re-configure physical channel and sends different messages according to different statuses UE exists in. The different messages are cell update confirm message and MBMS channel re-configuration request message.
414 UE reports the accomplishment of successful MBMS channel re-configuration to SRNC using MBMS channel re-configuration complete message.

### Method 4:

The process of causing MBMS channel type switching is due to the movement of other users or introduction of new services following is the detailed description for this process.

### (1) Switching from dedicated channel to common channel

501 DRNC decides to switch the channel type into common channel when it finds that the user number exceeds a certain threshold when a new user joins the MBMS service group and moves into the cell in DRNC.
502 DRNC sets up common channel for MBMS service with Node B2 covering the cell where UE locates.
503 DRNC notifies SRNC of the channel type change by using MBMS channel information indication message and carries common channel information set up in the message.
504-505 SRNC re-configures the MBMS channel of UE by exchanging MBMS channel re-configuration request/complete messages and changes the channel type from dedicated channel to common channel.
506-508 SRNC notifies DRNC to delete original dedicated channel configured for the MBMS service by sending radio link deletion response message. DRNC deletes dedicated channel resources in its Node B2 and sends radio link deletion response message to SRNC.
509 The transmission bearer of Iur interface on user plane between DRNC and SRNC is released.

### (2) Switching from common channel to dedicated channel

601 DRNC decides to switch the channel type into dedicated channel when it finds that the user number is lower than a certain threshold when a user leaves the MBMS service group and moves out of the cell in DRNC.
602 DRNC notifies SRNC of the channel type change by using MBMS channel information indication message.
603-605 SRNC indicates DRNC to set up dedicated channel for MBMS service of the user by sending radio link setup request message. DRNC sets up the corresponding dedicated radio link in its Node B2 and sends radio link setup response message to SRNC.
606 User plane transmission bearer of Iur interface is set up between SRNC and DRNC.
607 - 608 SRNC indicates UE to re-configure MBMS service channel by exchanging MBMS channel re-configuration request/complete messages.

While the invention has been shown and described with reference to certain preferred embodiments thereof, it will be understood by those skilled in the art that various changes in form and details may be made therein without departing from the scope of the invention as defined by the appended claims.

## Claims

1. A channel type switching method for multimedia broadcast and multicast service MBMS point to point P-t-P and point to multi point P-t-M channel, when a UE receiving MBMS service moves to a cell in drift radio network controller DRNC that has a lur interface with a serving radio network controller SRNC, comprising the steps of:
determining, at the DRNC, whether to perform switching channel type between the P-t-M channel and the P-t-P channel based on a number of users receiving the MBMS service in the cell;
notifying SRNC of the determined MBMS channel type by the DRNC;
notifying by the SRNC, the UE to reconfigure a MBMS channel via a radio resource control, RRC, message in order to switching channel type to the determined MBMS channel type; and
transmitting a MBMS data with the determined MBMS channel type to UEs requiring the MBMS service.

2. The method as set forth in claim 1, wherein said channel switching is at least determined based on comparing a number of UEs requiring MBMS service to a threshold.

3. The method as set forth in claim 1, wherein said channel switching further comprising the steps of:
SRNC transmitting radio rink setup request message to DRNC including at least one MBMS service identifier.

4. The method as set forth in claim 1, wherein said channel switching further comprising the steps of:
sending, at SRNC, a radio link setup message to DRNC to request a radio link setup;
determining, at DRNC, the channel type at least based on number of UEs that require MBMS service and informing the channel type to the SRNC notifying the UE to re-configure MBMS channel.

5. The method as set forth in claim 1, wherein said channel switching further comprising the steps of:
SRNC sending message to inquire MBMS service type to DRNC;
DRNC determining the channel type to be set up and informing SRNC the parameters of MBMS channel set up;
SRNC taking responsibility of completing setting up dedicated channel or obtains common channel information from DRNC;
SRNC notifying UE to re-configure MBMS channel via RRC message to complete channel switching.

6. The method as set forth in one of claim 3, 4 and 5, wherein said message transferred from SRNC to DRNC comprises MBMS service identifier the user is receiving, which enables DRNC to count the number of MBMS users.

7. The method as set forth in one of claim 3, 4 and 5, wherein, if the UE is the first person requesting for this service in DRNC, DRNC setting up RAB connection with core network.

8. The method as set forth in claim 1, further comprising the steps of:
serving radio network controller SRNC sending a radio link set up request message to the DRNC;
the DRNC sending MBMS service request message to the CN;
the CN requesting to set up data connection with the DRNC;
the DRNC sending response message to the CN.

9. The method as set forth in claim 8, wherein said SRNC sending messages to the DRNC comprises a MBMS service identifier.

10. The method as set forth in claim 1, further comprising the step of:
notifying, at the SRNC, the UE of reconfiguration of an MBMS channel via a radio resource control, RRC, message in order to switching channel type to the determined MBMS channel type.

11. The method as set forth in claim 1,
wherein the DRNC sends a MBMS channel information indication message to report the determined MBMS channel type to SRNC,
wherein the MBMS channel information indication message comprises at least one of the determined channel type and a MBMS service Identifier ID.

## Patentansprüche

1. Verfahren zum Umstellen des Kanaltyps für einen MBMS-P-t-P- und P-t-M-Kanal (Multimedia Broadcast and Multicast Service MBMS, Multimedialer Rundruf- und Gruppenrufdienst; Point to Point P-t-P, Punkt zu Punkt; Point to Multipoint P-t-M, Punkt zu Multipunkt bzw. Gruppenpunkt), wobei sich ein einen MBMS-Dienst empfangendes Anwendergerät UE zu einer Zelle in einer DRNC (Drift Radio Network Controller DRNC, Driftfunknetzwerksteuerung) bewegt, die eine lur-Schnittstelle mit einer SRNC (Serving Radio Network Controller SRNC, bedienende Funknetzwerksteuerung) aufweist, umfassend die nachfolgenden Schritte:
an der DRNC erfolgendes Bestimmen, ob ein Umstellen des Kanaltyps zwischen dem P-t-M-Kanal und dem P-t-P-Kanal auf Grundlage einer Anzahl von den MBMS-Dienst in der Zelle empfangenden Anwendern durchgeführt wird;
Benachrichtigen der SRNC über den bestimmten MBMS-Kanaltyp durch die DRNC; durch die SRNC erfolgendes Benachrichtigen des UE zur Rekonfigurierung eines MBMS-Kanals über eine RRC-Nachricht (Radio Resource Control RRC, Funkressourcensteuerung), um den Kanaltyp auf den bestimmten MBMS-Kanaltyp umzustellen; und
Übertragen von MBMS-Daten mit dem bestimmten MBMS-Kanaltyp an die den MBMS-Dienst anfordernden UEs.

2. Verfahren nach Anspruch 1, wobei das Umstellen des Kanals wenigstens auf Grundlage eines Vergleiches einer Anzahl von einen MBMS-Dienst anfordernden Anwendergeräten UEs mit einer Schwelle bestimmt wird.

3. Verfahren nach Anspruch 1, wobei das Umstellen des Kanals des Weiteren die nachfolgenden Schritte umfasst:
durch die SRNC erfolgendes Übertragen einer Funkverbindungseinstellanforderungsnachricht an die DRNC, die wenigstens eine MBMS-Dienstkennung beinhaltet.

4. Verfahren nach Anspruch 1, wobei das Umstellen des Kanals des Weiteren die nachfolgenden Schritte umfasst:
an der SRNC erfolgendes Senden einer Funkverbindungseinstellnachricht an die DRNC zur Anforderung einer Funkverbindungseinstellung;
an der DRNC erfolgendes Bestimmen des Kanaltyps wenigstens auf Grundlage einer Anzahl von den MBMS-Dienst anfordernden UEs und Mitteilen des Kanaltyps an die SRNC, die das UE zur Rekonfigurierung des MBMS-Kanals benachrichtigt.

5. Verfahren nach Anspruch 1, wobei das Umstellen des Kanals des Weiteren die nachfolgenden Schritte umfasst:
durch die SRNC erfolgendes Senden einer Nachricht zum Erfragen des MBMS-Diensttyps an die DRNC;
durch die DRNC erfolgendes Bestimmen des einzustellenden Kanaltyps und Mitteilen der Parameter des eingestellten MBMS-Kanals an die SRNC;
durch die SRNC erfolgendes Übernehmen der Verantwortung hinsichtlich des Beendens des Einstellens eines dedizierten Kanals oder Ermittelns einer gemeinsamen Kanalinformation von der DRNC;
durch die SRNC erfolgendes Benachrichtigen des UE zur Rekonfigurierung des MBMS-Kanals über die RRC-Nachricht zur Beendigung des Umstellens des Kanals.

6. Verfahren nach einem der Ansprüche 3, 4 und 5, wobei die von der SRNC an die DRNC übertragene Nachricht eine MBMS-Dienstkennung, die der Anwender empfängt, umfasst, die der DRNC ermöglicht, die Anzahl von MBMS-Anwendern zu zählen.

7. Verfahren nach einem der Ansprüche 3, 4 und 5, wobei dann, wenn das UE die erste diesen Dienst in der DRNC anfordernde Person ist, die DRNC eine RAB-Verbindung mit dem Kernnetzwerk einstellt.

8. Verfahren nach Anspruch 1, des Weiteren umfassend die nachfolgenden Schritte:
durch die bedienende Funknetzwerksteuerung SRNC erfolgendes Senden einer Funkverbindungseinstellanforderungsnachricht an die DRNC;
durch die DRNC erfolgendes Senden einer MBMS-Dienstanforderungsnachricht an das CN (Core Network CN, Kernnetzwerk);
durch das CN erfolgendes Anfordern eines Einstellens einer Datenverbindung mit der DRNC;
durch die DRNC erfolgendes Senden einer Antwortnachricht an die CN.

9. Verfahren nach Anspruch 8, wobei die an die DRNC sendende SRNC eine MBMS-Dienstkennung umfasst.

10. Verfahren nach Anspruch 1, des Weiteren umfassend die nachfolgenden Schritte:
an der SRNC erfolgendes Benachrichtigen des UE über eine Rekonfigurierung eines MBMS-Kanals über eine RRC-Nachricht (Radio Resource Control RRC,
Funkressourcensteuerung) um den Kanaltyp auf den bestimmten MBMS-Kanaltyp umzustellen.

11. Verfahren nach Anspruch 1,
wobei die DRNC eine MBMS-Kanalinformationshinweisnachricht sendet, um den bestimmten MBMS-Kanaltyp an die SRNC zu berichten,
wobei die MBMS-Kanalinformationshinweisnachricht wenigstens eines von dem bestimmten Kanaltyp und einer MBMS-Dienstkennungs-ID umfasst.

## Revendications

1. Procédé de commutation de type de canal pour un canal de point à point, P t P et de point à multipoint P t M de service de radiodiffusion et de multidiffusion multimédia, MBMS qui comprend les étapes suivantes, lorsqu'un équipement utilisateur UE recevant un service MBMS, se déplace vers une cellule dans un contrôleur de gestion des ressources distantes d'un réseau radio, DRNC, qui possède une interface de type Iur avec un contrôleur de réseau radio de desserte SRNC :
la détermination, au niveau du contrôleur DRNC de ce qu'il faut exécuter une commutation de type de canal entre le canal P t M et le canal P t P sur la base d'un certain nombre d'utilisateurs recevant le service MBMS dans la cellule,
la notification au contrôleur SRNC du type de canal de service MBMS déterminé par le contrôleur DRNC,
la notification, par le contrôleur SRNC, à l'équipement utilisateur UE de reconfigurer un canal de service MBMS par l'intermédiaire d'un message de commande de ressource radio, RRC, afin de commuter le type de canal pour être le type de canal de service MBMS déterminé, et
la transmission de données de service MBMS avec le type de canal de service MBMS déterminé aux équipements utilisateur UE demandant le service MBMS.

2. Procédé selon la revendication 1, dans lequel ladite commutation de canal est au moins déterminée sur la base de la comparaison à un seuil du nombre d'équipements utilisateur UE demandant un service MBMS.

3. Procédé selon la revendication 1, dans lequel ladite commutation de canal comprend en outre l'étape suivante :
la transmission, par le contrôleur SRNC, d'un message de demande d'établissement de liaison radio au contrôleur DRNC en incluant au moins un identificateur de service MBMS.

4. Procédé selon la revendication 1, dans lequel ladite commutation de canal comprend en outre les étapes suivantes :
l'envoi, au niveau du contrôleur SRNC, d'un message d'établissement de liaison radio au contrôleur DRNC afin de demander un établissement de liaison radio,
la détermination, au niveau du contrôleur DRNC, du type de canal au moins sur la base du nombre d'équipements utilisateur UE qui demandent un service MBMS et l'information du type de canal au contrôleur SRNC qui notifie aux équipements utilisateur UE de reconfigurer le canal de service MBMS.

5. Procédé selon la revendication 1, dans lequel ladite commutation de canal comprend en outre les étapes suivantes :
l'envoi, par le contrôleur SRNC, d'un message est destiné à demander le type de service MBMS au contrôleur DRNC,
la détermination, par le contrôleur DRNC, du type de canal devant être installé et l'information au contrôleur SRNC des paramètres d'établissement de canal de service MBMS,
la prise d'initiative, par le contrôleur SRNC, de compléter l'établissement du canal dédié ou de récupérer des informations de canal commun à partir du contrôleur DRNC,
la notification, par le contrôleur SRNC, à l'équipement utilisateur UE de reconfigurer le canal de service MBMS par l'intermédiaire d'un message de commande RRC, afin de compléter la commutation de canal.

6. Procédé selon l'une des revendications 3, 4 et 5, dans lequel ledit message transféré du contrôleur SRNC au contrôleur DRNC comprend l'identificateur de service MBMS que reçoit l'utilisateur, ce qui permet au contrôleur DRNC de compter le nombre d'utilisateurs du service MBMS.

7. Procédé selon l'une des revendications 3, 4 et 5, dans lequel, si l'équipement utilisateur UE est la première entité demandant ce service dans le contrôleur DRNC, le contrôleur DRNC établit une connexion de support d'accès radio, RAB, avec le réseau central.

8. Procédé selon la revendication 1, comprenant en outre les étapes suivantes :
l'envoi, par le contrôleur de réseau radio de desserte, SRNC, d'un message de demande d'établissement de liaison radio au contrôleur DRNC,
l'envoi, par le contrôleur DRNC, d'un message de demande de service MBMS au réseau central, CN,
la demande, par le réseau central CN, d'établir une connexion de données avec le contrôleur DRNC,
l'envoi, par le contrôleur DRNC, d'un message de réponse au réseau central CN.

9. Procédé selon la revendication 8, dans lequel l'envoi, par le contrôleur SRNC, de messages au contrôleur DRNC comprend un identificateur de service MBMS.

10. Procédé selon la revendication 1, comprenant en outre l'étape suivante :
la notification, au niveau du contrôleur SRNC, à l'équipement utilisateur UE de la reconfiguration d'un canal de service MBMS par l'intermédiaire d'un message de commande de ressources radio, RRC, afin de commuter le type de canal pour être le type de canal de service MBMS déterminé.

11. Procédé selon la revendication 1,
dans lequel le contrôleur DRNC envoie un message d'indication d'informations de canal de service MBMS afin de signaler au contrôleur SRNC le type de canal de service MBMS déterminé,
dans lequel le message d'indication d'informations de canal de service MBMS comprend au moins l'un du type de canal déterminé et d'un identificateur ID de service MBMS.
